(19) **Europäisches Patentamt**

**European Patent Office**

**Office européen des brevets**

(11) **EP 1 315 306 A1**

(12) **EUROPEAN PATENT APPLICATION**

(43) Date of publication:
  28.05.2003 Bulletin 2003/22

(51) Int Cl.⁷: $H04B\ 1/707$, $H04B\ 7/08$

(21) Application number: 01811133.6

(22) Date of filing: 23.11.2001

(84) Designated Contracting States:
  **AT BE CH CY DE DK ES FI FR GB GR IE IT LI LU MC NL PT SE TR**
  Designated Extension States:
  **AL LT LV MK RO SI**

(71) Applicant: **Ascom Systec AG**
  **5506 Mägenwil (CH)**

(72) Inventor: **Reed, Mark Craig**
  **5702 Niederlenz (CH)**

(74) Representative:
  **Roshardt, Werner Alfred, Dipl.-Phys.**
  **Keller & Partner**
  **Patentanwälte AG**
  **Schmiedenplatz 5**
  **Postfach**
  **3000 Bern 7 (CH)**

(54) **Process and apparatus for acquisition of DS-CDMA signals received by an antenna array**

(57)    A process for acquisition of a DS-CDMA signal transmitted especially in a multi-path high interference environment comprises the steps of receiving the transmitted signal by an antenna array, during a time interval combining the received signals according to an antenna beam direction and correlating the combined signal with a reference signal in order to determine timing and approximate incident direction of multi-path components of the transmitted signal. During different time intervals, the received signals are combined according to different antenna beam directions, such that a multi-dimensional correlation in space and time is performed. A receiver structure, serving especially as a base station in a DS-CDMA digital communication system with a plurality of mobile terminals, performing a process according to the invention shows reduced susceptibility to interference from other users of the communication system and improved gain. It is therefore particularly suited for the use in environments with high interference.

START

101 — receive and process baseband signals
$\mapsto S_i,\ i=1,\dots,n$

102 — set b=1

103 — combine signals $S_i$ using complex weights $w_{ib} \mapsto S_b'$

104 — set t=0

105 — filter out subsequence $S_b'(t)$

106 — correlate $S_b'(t)$ against known signal $\mapsto C_b(t)$

107 — $C_b(t) > C_{thres}$ — no / yes

108 — new multi-path component detected send parameters b, t to receiver

109 — $t = t_{beam}$ ? — no / yes

110 — $t \mapsto t + t_{offset}$

111 — b=B ? — no / yes

112 — $b \mapsto b+1$

**Fig. 1**

EP 1 315 306 A1

# EP 1 315 306 A1

## Description

### Technical Field

The invention relates to a process for DS-CDMA signal acquisition, especially in a multi-path distortion environment, the DS-CDMA signals being received by an antenna array. The process includes combining the signals received by the elements of the antenna array, the combined signal corresponding to an antenna beam direction. The invention further relates to a receiver structure for acquisition of a transmitted signal, received by an antenna array, and to a digital communication system with a base station and a plurality of mobile terminals, where the base station comprises such a receiver structure.

### Prior Art

The DS-CDMA (Direct Sequence Code Division Multiple Access) modulation technique has been developed for next generation digital cellular wireless communication, which e. g. allows to transmit multimedia information. In DS-CDMA communication, narrowband information from different users is transmitted at the same frequency and time using spreading codes which are different for every user. This yields a broadband signal, transmitted e.g. over a wireless link. At the receiver, the original narrowband signal is restored by multiplying the broadband signal by a despreading code, knowing the correct timing of the code.

For correct restoration of the original signal the despreading code has to be synchronised with the received signal. Synchronising can be divided into two phases, an initial acquisition phase and a tracking phase. Initial acquisition usually results in synchronised code chip phases of the received signal with the despreading code. This synchronisation has to be very precise, usually within a small fraction of the chip length. When this acquisition is completed, then the tracking phase maintains lock of the code sequence in this range.

Usually, signals transmitted by mobile terminals reach the base station via different paths, including one or several deflections and reflections. In modern DS-CDMA digital communication systems, where the chip rate is very high (3.84 MHz in the proposed 3GPP system, corresponding to a chip length of 260 ns), even small detours of a transmitted signal lead to delays greater than the chip length. The received signal is thus composed of several multi-path components being time-shifted due to different path lengths. For operation in high noise and interference environments, as expected when using efficient multi-user receivers, the synchronisation procedure - acquisition and tracking - should be performed where the signal to noise plus interference ratio is maximised for each path to be acquired.

A coherent combination of signals of different paths can be performed for example by a Rake receiver. Knowing the despreading start timing, the time delays and the measured signal-to-noise ratios of the different paths signals, such a device combines the different signals coherently according to their reliability (maximum ratio combining).

Acquisition determines the path parameters (delay) needed at the Rake receiver. This is usually performed by a so-called searcher or correlator. Such a device correlates a known code against subsequences of the received signal starting at given times and having the length of the known code. When the incoming code and the known code align with the correct timing, a signal peak results. The given start time of the subsequence is then identified to be the timing of the incoming code. The detection of this signal peak is easy when there is no noise or interference. Recently designed receivers for DS-CDMA communication systems however support a large number of users in the same cell, double or triple of what is supported by conventional Rake receivers. Having many users in one cell leads to interference and therefore to a lot of noise in the received signal. Additionally, such highly efficient receivers need the same accurate timing information as a RAKE receiver. It is therefore much more difficult to synchronise with the necessary precision.

The receivers of wireless base stations of a DS-CDMA mobile communications system can support a plurality of antenna elements which are closely spaced. Usually the signals received at the antenna elements are non-coherently combined to yield a certain diversity gain.

The publication US 6 064 338 describes an array antenna system of a wireless base station in CDMA mobile communications which combines signals that have been received by the elements of an array antenna. A searcher has matched filters which calculate correlation signals for each of the antenna elements. These correlation signals are subsequently used to control a beam former finally combining the signals received at the antenna elements yielding a combined signal which is the input for a common Rake receiver, which combines the multi-path components and identifies the data. The complexity of this receiver system is large compared to a usual array antenna system because the signal of each antenna element has to be correlated separately to a reference signal in order to determine the correlation timing and the phase for the signal of each antenna element.

### Representation of the Invention

It is therefore an object of the present invention to provide a process of equivalent complexity which performs very reliable acquisition of a DS-CDMA signal transmitted, even at large interference and in the presence of multi-path distortion.

The object can be achieved by a process defined by claim 1.

According to the invention, a transmitted DS-CDMA signal is received by an antenna array having a total number of B beam directions. Such an array comprises a number of n antenna elements and every antenna element receives its own signal, where n is equal or greater than two. At least two time intervals are defined and to each time interval and each beam direction a vector of complex valued weighting factors is assigned, each vector of weighting factors corresponding to a different antenna beam direction and comprising a number of n elements (i.e. weighting factors). In each time interval and for each beam direction, the signals received by the antenna elements are weighted by the complex valued weighting factors of the assigned vector and subsequently combined. For each time interval and each beam direction, a combined signal results, which is correlated with a predetermined reference signal. The final results of this correlation procedure are the timings and the approximate incident directions of detected multi-path components of the transmitted signal.

Using signals that correspond to different beam directions is very advantageous compared to using signals that have been received by an omni-directional antenna or that have been obtained by non-coherently combining the signals received by elements of an antenna array. Performing a process according to the invention, most of the interfering signals, such as signals coming from other mobile stations of the same or a neighbouring cell or from other base stations, are filtered out before the correlator process, because their incident direction lies outside the field monitored by the actual beam. The combined signal contains much less interference than the signals initially received by the individual antenna elements, such that its correlation of this new combined signal with the reference signal, corresponding to the user (or channel) transmitting the signal, yields much improved results for the timing position of detected multi-path components of the transmitted signal. Additionally, the approximate incident direction of the transmitted signal is determined by the process which can be used to initialise the signal direction of arrival (DOA). Furthermore, the advantages of using an antenna array to receive signals, especially the improved gain, are preserved. The reduced interference and the improved gain lead to a smaller number of missed detections and to a larger number of correct detections, especially in an environment with heavy interference. Because the signals received by the antenna elements are coherently combined in a very early stage of the process and because correlation has to be performed only for one single input signal, not for multiple antenna elements, the complexity of the process is kept low.

The timing information obtained by performing the process is further used especially for despreading of the spread-spectrum signal and for coherently combining different multi-path components of the signal. The approximate incident of each path direction may be used along with a beam former to reduce interference. The incident of each path can also be used in the signal DOA tracking phase.

Preferably, the vectors of complex valued weighting factors corresponding to different beam directions used during different time intervals are predetermined, i. e. the electronically steered beam directions are fixed and the process is performed systematically, sequentially scanning over a matrix of timing positions and beam directions. This ensures a regular monitoring of all incident directions taken into account for new users or new multi-path components of tracked users. Furthermore, the predetermined beam directions may be simply numbered such that not the whole information corresponding to a given beam has to be known at other steps of the receiving process but only a beam number.

In many cases, antenna arrays used in digital communication systems are universal linear arrays (ULA) comprising a certain number of antenna elements arranged in a common plane and equally spaced from each other. The signals received by the elements of such an antenna array can be combined such that a single angle between the plane and the principal direction of the resulting beam can be adjusted. Therefore, there is a single spatial dimension (said angle) and the usual time dimension in which the reference signal is looked for and the correlation is performed in two dimensions.

More complicated arrangements of the antenna array elements allow for combining the received signals such that the resulting beam has two dimensions. Therefore, the signals can be discriminated according not only to their (horizontal) incident direction but also according to their elevation. In this case, the correlation is performed in three dimensions. Such an additional spatial dimension means even less interference on the signal is detected.

More complicated arrangements of the antenna elements may also lead to better beam characteristics, especially to beams whose sensitivity is mostly confined to a limited field, such that the interference before the correlation process is minimised.

Usually, the multi-dimensional correlation operation will be implemented such that each time interval is broken up into bins and that a region of incident direction is assigned to the corresponding antenna beam direction. Each of the bins constructed this way represents a certain period of time and a certain region of incident direction.

The difference of starting times of two subsequent bins is chosen according to the desired precision of the signal timing to be determined. Usually it will be chosen smaller than the chip length of the transmitted DS-CDMA signal, i.e. the chip length used in the digital communication system which transmitted the DS-CDMA signal.

**EP 1 315 306 A1**

Preferably, the region of incident direction of the spatial bin is chosen such that a variation of sensitivity within the bin does not exceed an upper bound which is common to all the bins, i. e. the loss of every incident direction assigned to the bin compared to the principal direction of the beam should not exceed the upper bound. Depending on the characteristics of the single antenna elements as well as on their arrangement, not all bins need to have the same size, i. e. they do not have to cover the same angle or steradian. The number of spatial bins to be considered to monitor a certain region of incident directions, and therefore the number of vectors of complex valued weighting factors and the number of time intervals, depends on the characteristics of the array antenna as well as on the maximum loss allowed.

A receiver structure in a DS-CDMA digital communication system for acquisition of a transmitted DS-CDMA signal, performing the process according to the invention, comprises an antenna array composed of a total number of n antenna elements (where n is equal or greater than two) for receiving the transmitted signal and generating a signal for each antenna element, said antenna array having a total number of B beam directions. It further comprises a beam database for storing vectors of complex valued weighting factors corresponding to different beam directions. In different time intervals different vectors of complex valued weighting factors are passed to a beamformer which weights the antenna element signals by the received weights and combines the weighted signals to a combined signal for each beam direction. For each time interval, the combined signal is correlated with a predetermined reference signal by a correlator. The final results of the correlation are the timing position and the approximate incident direction for each detected multi-path component of the transmitted signal.

In a simple realisation, the beam database stores predetermined vectors of complex valued weighting factors which remain unchanged during the operation of the receiver structure. In every new time interval, a new vector of weighting factors is passed to the beamformer until all the stored beam directions have been utilised. After one such scan cycle has finished, the first steering vector corresponding to the first beam direction is passed to the beamformer again and a new scan cycle starts. Like this, all the stored beam directions are monitored alike and the vectors of weighting factors have to be determined and stored only once, prior to the receiver being placed into operation.

More sophisticated setups may include a beam database where the stored vectors of weights are updated during operation. This can be done especially to reduce heavy interference in a region of incident direction where a lot of different signals are expected.

In many cases, the receiver structure according to the invention will comprise a universal linear antenna (ULA). More sophisticated antenna array designs allow for controlling the beam characteristics in addition to the beam direction.

For switching through the time bins corresponding to a given beam direction, the receiver structure includes a controller. After beamforming the signal is passed to the correlator.

The difference of starting times of two subsequent bins is the maximum precision that can be reached for the timing of the signal determined by the correlation process. Therefore, timer means are comprised by the receiver structure for controlling the time offset between subsequent bins. In a DS-CDMA digital communication system, the accuracy for the despreading timing needed at reception of spread spectrum signals depends on the actual design of the receiver. In general, however, it is of the order of a chip length of the DS-CDMA signal (i.e., the chip length of the DS-CDMA system which transmitted the signal) down to a small fraction of the chip length.

If the signals received by the elements of an antenna array are weighted by complex valued weights and subsequently combined in a beamformer, the composite system of antenna array and beamformer has properties similar to a directional antenna having a characteristic beam. In a principal direction of the beam the sensitivity of the composite system is maximal and by moving away from this principal direction the sensitivity decreases. The receiver should be able to detect signals having different incident directions with similar reliability and accuracy, the variation of sensitivity within a region of incident direction of a bin should not exceed a certain upper bound common to all the bins, say 1-2 dB. This requirement can be fulfilled by supplying a large enough number of vectors of complex valued weighting factors, thereby having a large enough number of different beam directions with an angle between the principal directions of two adjacent beams such that the signal power difference at different angles is no more than a upper bound design parameter.

In a DS-CDMA digital communication system according to the invention, with a base station and a plurality of mobile terminals, the base station comprises a receiver structure according to the invention. The technique is independent of the actual frame format or the exact spreading or scrambling formats utilised. In a system having a plurality of base stations it is possible to use the receiver structure according to the invention merely for some of the base stations, namely those where a large number of users are to be expected or where a large number of multi-path components occur due to topographical reasons, i. e. if there are a lot of buildings, hills etc. in the neighbourhood of the base stations which reflect and deflect the signals to be received.

From the following detailed description and from all the claims as a whole it will be clear to a person skilled in the art, that there exist more advantageous embodiments and combinations of characteristics of the invention.

4

**Brief Descriptions of the Drawings**

The drawings used for illustration of the examples show:

Fig. 1     A flowchart of processing according to the invention for acquisition of a transmitted signal,

Fig. 2     a diagram for describing a linear antenna array,

Fig. 3     a schematic diagram of an antenna sector divided into several distinct spatial bins,

Fig. 4     a schematic diagram of a receiver structure according to the invention,

Fig. 5     a schematic diagram of a certain realisation of a receiver structure according to the invention,

Fig. 6     a schematic diagram of the signal processed by the correlator unit.

In principle in the drawings the same objects are given the same reference signs.

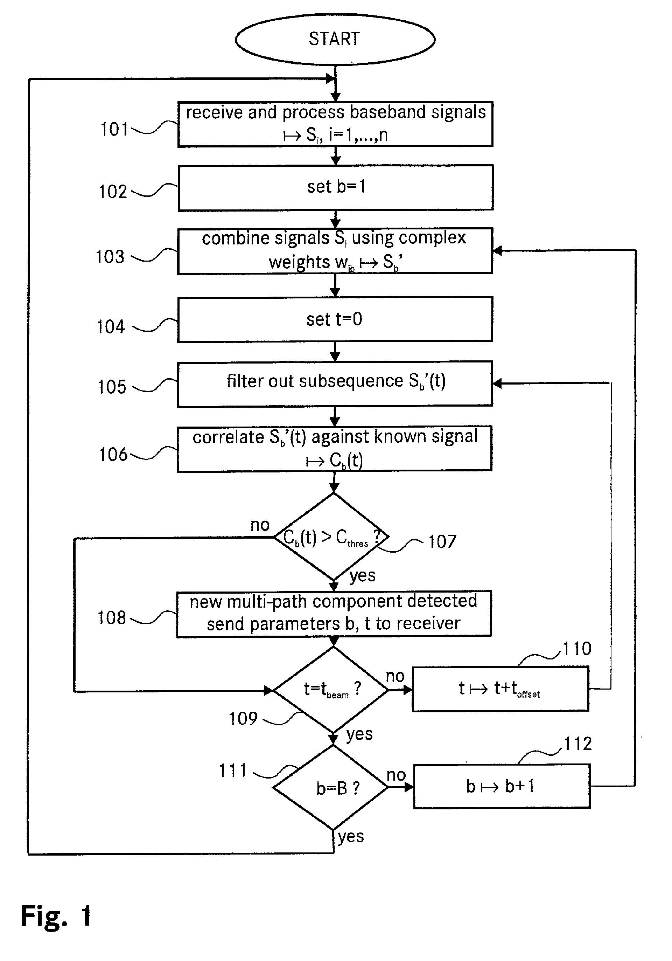

Figure 1 is a flowchart representing an example of the process according to the invention. There exist many other methods for implementing the invention. It is assumed that the signals are received by $n$ antenna elements, where $n$ is a generic number, $n \geq 2$. The RF analogue antenna output is transformed to a digital baseband signal that can further be processed, the transformation including down conversion, filtering, automatic gain control and A/D conversion. The resulting digital signals for each antenna element are denoted by $S_i$, $i=1,...,n$ (step 101).

In the beginning, the first beam direction $b = 1$ is considered (step 102). The corresponding vector of complex valued weights $w_{ib}$ ($i = 1,...,n$) is used to process the signals $S_i$ according to

$$S_b{}' = \sum_{i=1}^{n} w_{ib} \cdot S_i \,, \tag{1}$$

yielding the signal $S_b'$ corresponding to the $b$-th beam (step 103). Certain subsequences $S_b'(t)$ of the initial signal are filtered out. A subsequence $S_b'(t)$ starts at time $t$ and has the length $t_{code}$ of the reference signal to be matched. At the beginning, $t = 0$ is set (step 104) and the first sample (subsequence) $S_b'(0)$ is used (filtered out) (step 105) based on the direction of steering vector $w_b$. Any well known pattern comparison or sequence correlation technique may be used.

This set of samples (subsequence) is correlated with the reference signal X(r) yielding the correlation value $C_b(t)$:

$$C_b(t) = \frac{1}{m} \sum_{j=0}^{m-1} S_b{}'(t + j \cdot \Delta t) X(j \cdot \Delta t), \text{ where } m = t_{code} / \Delta t \,, \tag{2}$$

where $\Delta t$ is the offset between two sampled values of the signal (step 106). In the following, the measured correlation $C_b(t)$ is compared to a threshold value $C_{thres}$ (step 107). If the measured correlation exceeds the threshold, $C_b(t) > C_{thres}$, it is assumed that a new multi-path component of the signal has been detected. This information and the coordinates in time $t$ and space $b$ are the results of the process according to the invention and are further used in the receiving process, namely to track the detected signal or to combine different multi-path components of a signal (step 108).

In any case, if the time $t_{beam}$, the length of the time interval during which a signal $S_b'$ corresponding to beam $b$ is generated, has not yet been reached (step 109), the value of the subsequence start time $t$ is increased by an offset time $t_{offset}$ (step 110) and the following subsequence (sample) is filtered out and analysed.

Once the signal corresponding to a beam $b$ has been correlated to determine if any users or paths exist in this beam, $t = t_{beam}$, the complex valued weights corresponding to the next beam direction $b+1$ (step 112) are used to generate a new combined signal to be subsequently tested with the correlator. After running through all the B beam directions (step 111), the whole process starts over again.

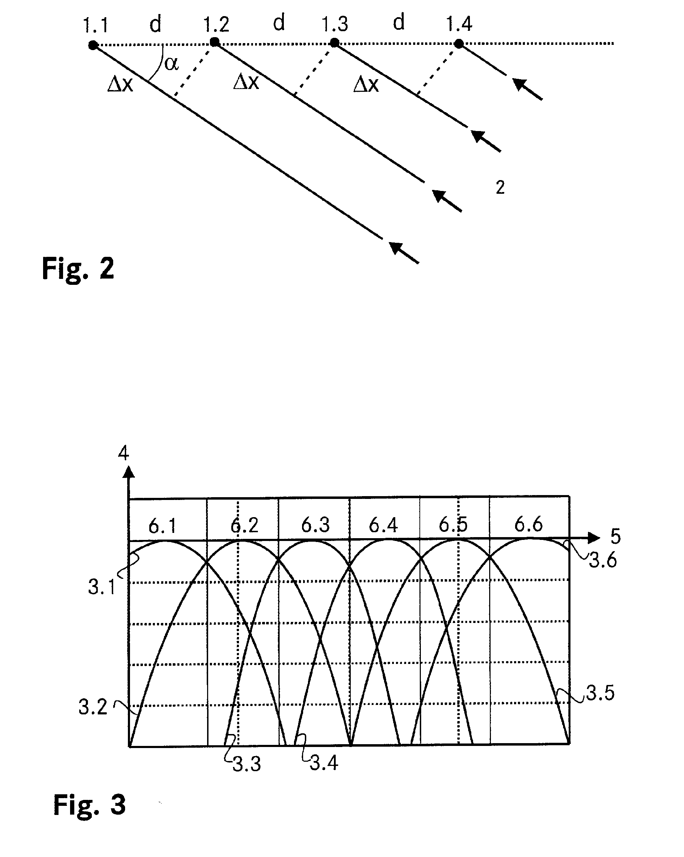

Figure 2 is a diagram useful in describing how signals of the elements of a (linear) array antenna with $n$

elements can be combined to a beam having a principle direction at an angle $\alpha$ from the line of antenna elements 1.1-1.n. For simplicity, only the first four elements of the antenna array are displayed.

We assume that the antenna elements are equally spaced with a distance d between two adjacent elements, furthermore that the signal 2 arrives from a distance much further away than the length of the antenna array. The path lengths of the signals arriving from the principal direction of the beam will differ by multiples of $\Delta x$ at the different antenna elements where

$$\Delta x = d \cdot \cos\alpha. \qquad (3)$$

This will lead to phase shifts of $\Delta\varphi_i = i \cdot \frac{2\pi}{\lambda} d \cos\alpha$, where $i = 1,...,n$ is an integer indexing the antenna element. Performing conjugate phase shifts, by multiplying the signals from the antenna elements by conjugate complex valued weights, such that all the $n$ signals are in phase if the transmitted signal is coming from the assumed direction, and combining the shifted signals will result in a beam characteristic of the combined antenna elements having a maximum sensitivity at an angle $\alpha$ from the line of antenna elements and a certain loss at angles differing from $\alpha$. In mobile communication systems where the mobile stations are expected to have only small elevation, compared to their distance, a possible implementation with a ULA will be arranged such that the antenna elements are in the horizontal plane. With this possible realisation the beams that can be combined discriminate well between mobile stations having different directions in the horizontal plane.

Figure 3 shows how a 120° sector of a receiving structure according to the invention is divided up into several spatial bins 6.1-6.6 corresponding to different beams. For simplicity, a one-dimensional antenna array (e. g. ULA) is assumed. The sensitivity 3.1-3.6 of beams whose principal directions are spaced by about 20° is displayed. On the abscissa 5 is shown the angle of the incident direction of a signal between 30 and 150° in steps of 30°. On the ordinate 4 is shown the power loss from -10 to +2 dB in steps of 2 dB, compared to the maximum sensitivity in each bin. In this case, the spatial bin size is chosen such that the absolute difference of the receiver sensitivity within one bin does not exceed about 1.5 dB, i. e. the loss at the border of a bin is about 1.5 dB or less compared to the principal beam direction corresponding to the bin. For the acquisition of a signal the complex valued weights according to these different beams are used to combine the signals received by the antenna elements.

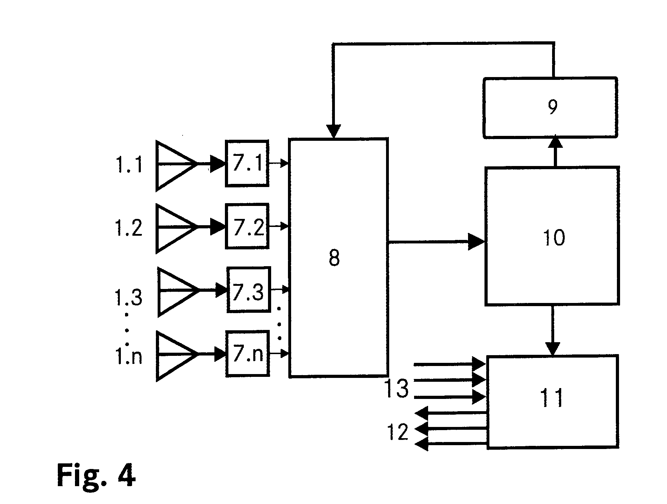

Figure 4 shows a schematic diagram of a possible receiver structure according to the invention. It only shows those elements of the receiver structure that are essential for the illustration of the general procedure according to the invention. Some components which are usual for like receivers (additional beamformers etc.) are not drawn.

The signal is transmitted using DS-CDMA. For the purpose of acquisition at a receiver the sent signal comprises a reference signal that is known at the receiver. In general it reaches the receiver via several paths because of reflections. It is detected by an array of antennas 1, built by the elements 1.1...1.n (where n denotes the number of antenna elements). For every antenna element, there is a receiving circuit 7.1...7.n which transforms the RF analogue antenna output to a digital baseband signal that can further be processed. The circuits 7.1...7.n thus perform in particular down conversion, filtering, automatic gain control and A/D conversion.

The digital signals are combined in the beam former 8 which combines the input of several antenna elements according to equation (1) such that the properties of the combined signal correspond to a signal as received by a directional antenna whose beam is directed to a given angle. The beamformer 8 is receiving the beam parameters from the beam database 9 which is controlled by the correlator unit 4 to serially deliver, during certain time intervals, complex valued weights corresponding to a certain beam direction. These weights are multiplied by the signals obtained by the antenna elements. The resulting signals are summed up which yields a single combined signal corresponding to the actual beam direction.

This signal is delivered to the correlator unit 10, where it is divided into subsequences having the length of the code to be correlated. The offset of two succeeding subsequences corresponds to the resolution of the correlation. Usually it is chosen to be a fraction of one chip of the communication system. The resulting sequences corresponding to a given time and to a given beam direction are correlated with the reference signal.

As a result of this multi-dimensional correlation one obtains for each multi-path component detected its preferred beam direction, i. e. the direction where the signal-to-noise ratio is best, and its timing. This information is transferred to the receiver 11 which coherently combines the signals received via different paths. For that purpose it controls a certain number of beamformers, delivering complex valued weights 12 each of them directing the beam to a given incident direction of a multi-path signal. The thereby obtained signals 13 are then combined coherently using the given timing information yielding a fading-free signal with improved sensitivity to interference.

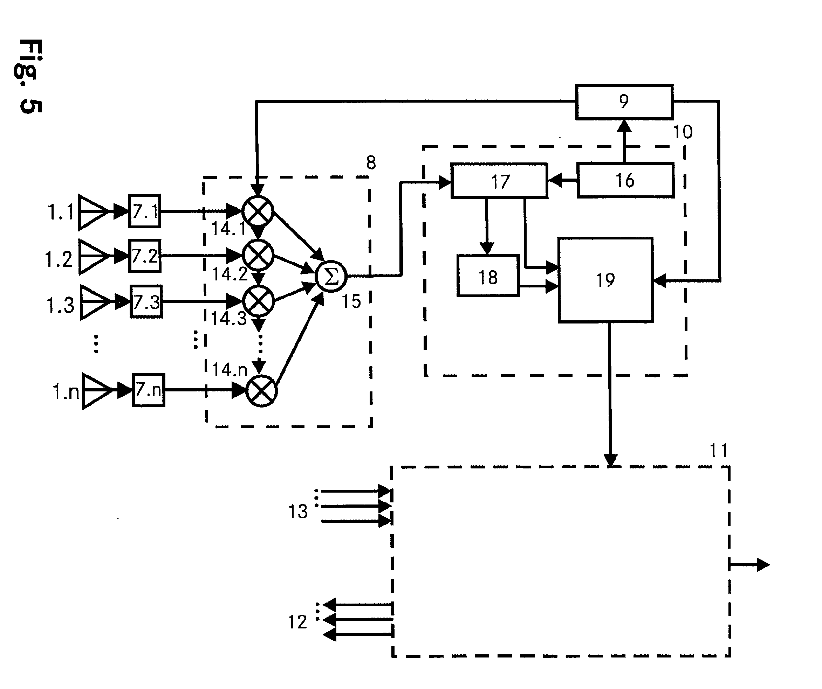

Figure 5 shows in detail another possible preferred embodiment of the receiver structure according to the invention, carrying out the process described above. The array antenna elements 1.1-1.n and the corresponding receiving circuits 7.1-7.n deliver digital baseband signals coming from each of the n antenna elements.

The beamformer 8 combines these signals such that its output corresponds to a signal as received by a directional antenna having a characteristic beam with a direction of maximum sensitivity. In the beamformer 8, rotators 14.1-14.n rotate each of the input signals by a known angle delivered by the beam database 9 corresponding to the antenna element and the desired beam direction. Doing so, will adapt the phase rotations in order to obtain a beam whose principal direction points to a given angle. In an adder 15 the output signals of the rotators are added yielding a signal corresponding to a given beam.

In the correlator unit 10, the signal enters a time filter 17 which selects subsequences of the received signal, having the length of the reference signal to be matched, spaced by an offset corresponding to the desired temporal resolution. These subsequences are delivered to a matched filter unit 18 which correlates these sequences with the reference signal, calculating a certain correlation value according to equation (2). If the correlation value between signal and reference reaches a certain threshold, it is assumed that a multi-path component of the signal has been detected and the receiver interface 19 is notified.

The correlator unit 10 includes a clock 16 delivering timing information to the time filter 17 as well as to the beam database 9. The time filter 17 and the beam database 9 are synchronised such that for a given time interval having the length of the number of temporal bins times the offset of two subsequent temporal bins, the complex valued weights of a single beam are delivered to the beam former. In a next interval of the same length, the complex valued weights of the next beam are delivered etc. Once all the beams are scanned, the correlator unit starts over with the first spatial bin. The time filter 17 continually submits absolute start times of the temporal bins (subsequences) currently analysed to the receiver interface 19 such that the absolute synchronisation timing of a detected multi-path component is known at the receiver interface 19. The beam database 9 as well delivers information about the current beam to the receiver interface 19. Like this, every time the matched filter unit 18 detects a multi-path component, the receiver interface 19 assigns to it the synchronisation timing as well as the corresponding beam. This information is then passed to the receiver 11.

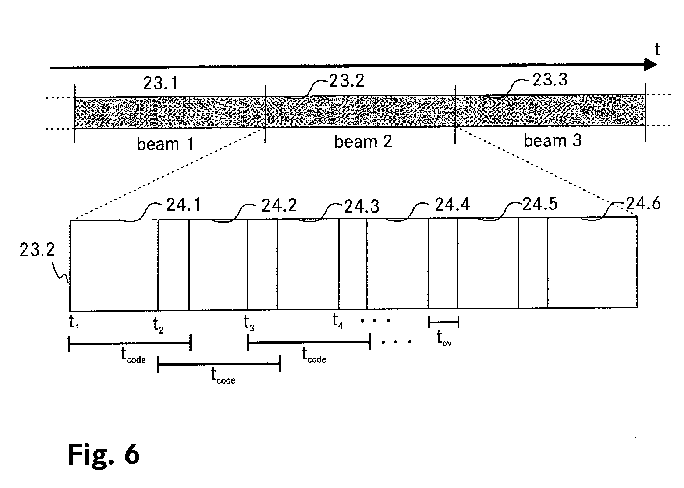

Figure 6 displays a possible extract from the signal as delivered to the correlator unit 10 by the beamformer 8. It consists of segments 23.1, 23.2, ... corresponding to the different beam directions, all having equal length $t_{beam}$. From this signal, subsequences 24.1, 24.2, ... are selected by the correlator unit, having the length $t_{code}$ of the code to be matched and the starting times $t_1, t_2,...$ of two successive sequences being spaced by an offset $t_{offset}$. The subsequences have a certain overlap of length $t_{ov}$ during which the corresponding signal occurs in both subsequences. The maximum temporal resolution of the system is set by the offset $t_{offset}$. Note, that in a realistic process according to the invention, the length of the code $t_{code}$ and therefore the length of the subsequences 24.1, 24.2,... will generally be much longer than the offset time $t_{offset}$ such that every part of the code is contained in a large number of subsequences and such that a good temporal resolution can be achieved.

The embodiment of the invention described in detail above shows very low complexity and works well, especially if the spatial bins are well separated, i. e. if each multi-path component is detected by only one beam direction considered. The danger of missed detections is larger for well separated bins, however. Therefore, if a particularly high spatial resolution is required a more elaborate setup of the process may be considered.

In particular, the correlation values corresponding to the different subsequences as well as to the different beam directions $C_b(t)$ collected during one run of the process may be stored and subsequently analysed. Every local maximum of the multi-dimensional function whose value exceeds a threshold value will then be assigned to a multi-path component of the transmitted signal. Using the stored information and performing some interpolations the precision of the results may even be enhanced without having to increase the number of bins to be taken into account.

To summarise, it can be stated that the invention allows for a far improved acquisition of transmitted signals in DS-CDMA digital communication systems received by an antenna array even in environments with heavy interference using a low complexity technique. Such a process is best suited for use in highly efficient receivers being able to support a large number of users in the same cell.

## Claims

1.   Process for acquisition of a DS-CDMA signal, transmitted especially via a multi-path channel with high interference, comprising the steps of:

a) receiving the transmitted signal by n antenna array elements of an antenna array having B beam directions in order to generate n antenna element signals, where n and B are integer numbers and $n \geq 2$;

b) defining at least two time intervals and assigning each time interval and each beam direction b a vector of n complex valued weighting factors $w_{ib}$, i = 1...n, the different vectors of complex valued weighting factors $w_{ib}$ corresponding to different antenna beam directions b, where b= 1...B denotes the b-th beam direction;

c) in each time interval weighting the antenna element signals by the assigned vector of complex valued weighting factors $w_{ib}$ and combining the weighted antenna element signals to a combined signal;

d) for each time interval, correlating the combined signal with a predetermined reference signal in order to determine timing and approximate incident direction of multi-path components of the transmitted signal.

2. Process according to claim 1, **characterised in that** the antenna array elements are arranged in a common plane and parallel to each other, forming a universal linear array (ULA) and that the vector of complex valued weighting factors is chosen such that different antenna beam directions all lie in a common plane.

3. Process according to claim 1 or 2, **characterised in that** each time interval is broken up into bins and that to each bin is assigned a distinct period of time and region of incident direction.

4. Process according to claim 3, **characterised in that** a difference of starting times of two subsequent bins is smaller than a chip length of the transmitted DS-CDMA signal.

5. Process according to claim 3 or 4, **characterised in that** the region of incident direction of a bin is chosen such that a variation of sensitivity within the bin does not exceed an upper bound common to all bins.

6. Receiver structure in a digital communication system for acquisition of a DS-CDMA signal, transmitted especially via a multi-path channel with high interference, comprising

a) an antenna array (1) composed of n antenna elements (1.1, 1.2, ...) for receiving the transmitted signal in order to generate n antenna element signals, the antenna array having B beam directions, where n and B are integer numbers and $n \geq 2$;

b) a beam database (9) for storing for each beam direction b at least two vectors of complex valued weighting factors $w_{ib}$, i = 1...n, assigned to different time intervals, the different vectors of complex valued weighting factors $w_{ib}$ corresponding to different antenna beam directions b, where b = 1...B denotes the b-th beam direction;

c) a beamformer (8) for weighting the antenna element signals in each time interval by the assigned vector of complex valued weighting factors $w_{ib}$ and for combining the weighted antenna element signals to a combined signal;

d) a correlator (10) for correlating for each time interval the combined signal with a predetermined reference signal in order to determine timing and approximate incident direction of multi-path components of the transmitted signal.

7. Receiver structure according to claim 6, **characterised in that** the antenna array (1) is a universal linear antenna (ULA) and that the different antenna beam directions all lie in a common plane.

8. Receiver structure according to claims 6 or 7, **characterised by** controller means for switching through the time bins.

9. Receiver structure according to claim 8, **characterised in that** timer means are comprised for controlling a difference of starting times of two subsequent bins, such that the difference of starting times of two subsequent bins is smaller than a chip length of the transmitted DS-CDMA signal.

10. Receiver structure according to claim 8 or 9, **characterised in that** the vectors of complex valued weighting factors $w_{ib}$ are chosen such that a variation of sensitivity within a region of incident direction assigned to a bin does not exceed an upper bound common to all bins.

11. DS-CDMA digital communication system with a plurality of mobile terminals and a base station with a receiver structure for acquisition of a DS-CDMA signal transmitted by a mobile terminal, especially via a multi-path channel with high interference, comprising

a) an antenna array (1) composed of n antenna elements (1.1, 1.2,...) for receiving the transmitted signal in order to generate n antenna element signals, the antenna array having B beam directions, where n and B are integer numbers and $n \geq 2$;

b) a beam database (9) for storing for each beam direction b vectors of complex valued weighting factors $w_{ib}$, $i = 1...n$, assigned to at least two time intervals, the different vectors of complex valued weighting factors $w_{ib}$ corresponding to different antenna beam directions b, where $b = 1...B$ denotes the b-th beam direction;

c) a beamformer (8) for weighting the antenna element signals in each time interval by the assigned vector of complex valued weighting factors $w_{ib}$ and for combining the weighted antenna element signals to a combined signal;

d) a correlator (10) for correlating for each time interval the combined signal with a predetermined reference signal in order to determine timing and approximate incident direction of multi-path components of the transmitted signal.

START

101 — receive and process baseband signals $\mapsto S_i$, i=1,...,n

102 — set b=1

103 — combine signals $S_i$ using complex weights $w_{ib} \mapsto S_b'$

104 — set t=0

105 — filter out subsequence $S_b'(t)$

106 — correlate $S_b'(t)$ against known signal $\mapsto C_b(t)$

107 — $C_b(t) > C_{thres}$ ?    no

yes

108 — new multi-path component detected send parameters b, t to receiver

109 — t=$t_{beam}$ ?    no    110 — $t \mapsto t+t_{offset}$

yes

111 — b=B ?    no    112 — $b \mapsto b+1$

yes

## Fig. 1

**Fig. 2**

**Fig. 3**

**Fig. 4**

Fig. 5

**Fig. 6**

**European Patent Office**

## EUROPEAN SEARCH REPORT

Application Number

EP 01 81 1133

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 61879 A (NOKIA NETWORKS OY ;GLISIC SAVO (FI); KATZ MARCOS (FI); IINATTI JAR) 23 August 2001 (2001-08-23) | 1-4,6-9, 11 | H04B1/707 H04B7/08 |
| A | * abstract * <br> * page 1, line 6-11 * <br> * page 2, line 9-16 * <br> * page 4, line 6-9 * <br> * page 7, line 15-36 * <br> * page 14, line 23 - page 16, line 6 * <br> * figures 4,8 * | 5,10 | |
| A | MADYASTHA R K ET AL: "SYNCHRONIZATION AND DETECTION OF SPREAD SPECTRUM SIGNALS IN MULTIPATH CHANNELS USING ANTENNA ARRAYS" PROCEEDINGS OF THE MILITARY COMMUNICATIONS CONFERENCE (MILCOM). SAN DIEGO, NOV. 6 - 8, 1995, NEW YORK, IEEE, US, vol. 3, 6 November 1995 (1995-11-06), pages 1170-1174, XP000586706 ISBN: 0-7803-2490-0 <br> * page 1170, left-hand column, paragraph 1 - page 1171, left-hand column, last paragraph * <br> * figure 1 * | 1-11 | |
| A,D | US 6 064 338 A (SEKI HIROYUKI ET AL) 16 May 2000 (2000-05-16) <br> * abstract * <br> * figure 3 * | 1-11 | |

**TECHNICAL FIELDS SEARCHED (Int.Cl.7)**

H04B
G01S

The present search report has been drawn up for all claims

| Place of search | Date of completion of the search | Examiner |
|---|---|---|
| MUNICH | 11 April 2002 | Helms, J |

EP 1 315 306 A1

## ANNEX TO THE EUROPEAN SEARCH REPORT
## ON EUROPEAN PATENT APPLICATION NO.

EP 01 81 1133

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2002

| Patent document cited in search report | | Publication date | Patent family member(s) | | Publication date |
|---|---|---|---|---|---|
| WO 0161879 | A | 23-08-2001 | FI | 20000273 A | 10-08-2001 |
| | | | FI | 20002134 A | 10-08-2001 |
| | | | AU | 3382101 A | 20-08-2001 |
| | | | AU | 3382201 A | 27-08-2001 |
| | | | EP | 1175736 A1 | 30-01-2002 |
| | | | WO | 0159948 A1 | 16-08-2001 |
| | | | WO | 0161879 A1 | 23-08-2001 |
| US 6064338 | A | 16-05-2000 | JP | 11274976 A | 08-10-1999 |

For more details about this annex : see Official Journal of the European Patent Office, No. 12/82